# FASCICULE DE BREVET EUROPEEN

(11) **EP 4 022 189 B1**
(45) Date de publication et mention de la délivrance du brevet: **27.09.2023**
(21) Numéro de dépôt: 20775382.3
(22) Date de dépôt: 24.08.2020
(51) Int. Cl.: F16B 2/06, F16B 2/12

(54) **COLLIER DE SERRAGE POUR MAINTENIR AU MOINS UN ELEMENT DE RESEAU SUR UN POTEAU, SYSTEME DE POSITIONNEMENT ET PROCEDE DE POSITIONNEMENT ASSOCIES**
KLEMMRING ZUM HALTEN MINDESTENS EINES NETZELEMENTES AN EINEM PFOSTEN, ZUGEHÖRIGES POSITIONIERUNGSSYSTEM UND POSITIONIERUNGSVERFAHREN
CLAMPING COLLAR FOR KEEPING AT LEAST ONE NETWORK ELEMENT ON A POST, ASSOCIATED POSITIONING SYSTEM AND POSITIONING METHOD

(30) Priorité: 27.08.2019 FR 1909425
(43) Date de publication de la demande: 06.07.2022
(73) Titulaire: Orange, 92130 Issy-les-Moulineaux (FR)
(72) Inventeur: GUIRAUD, Eric, 92326 CHÂTILLON CEDEX (FR)
(74) Mandataire: Cabinet Beau de Loménie
(86) Numéro de dépôt international: PCT/FR2020/051495
(87) Numéro de publication internationale: WO 2021/038166

(56) Documents cités:
- WO-A2-2018/088792
- KR-B1- 101 056 640
- US-A- 2 785 217

## Description

### Domaine Technique

La présente invention se rapporte au domaine général de la gestion d'équipements d'un réseau, et concerne notamment un collier de serrage pour maintenir un élément de réseau sur un poteau.

L'invention s'applique plus particulièrement à un réseau comprenant des lignes aériennes de télécommunications ou d'autre nature. Il s'agit par exemple d'un réseau de téléphonie fixe tel que le réseau RTC (acronyme de « Réseau Téléphonique Commuté ») ou bien encore d'un réseau de fibre optique.

### Technique antérieure

Les lignes aériennes d'un tel réseau sont formées par une pluralité de poteaux portant des câbles, les câbles pouvant notamment être maintenus sur les poteaux au moyen de colliers de serrage fixés sur la partie supérieure du poteau, typiquement lorsque les poteaux sont en bois, ces colliers de serrage supportant une traverse pour accueillir le câble.

Les lignes aériennes peuvent être endommagées au cours du temps, par exemple suite à de mauvaises conditions climatiques, telles qu'un orage.

Un collier de serrage serrant un poteau ou au moins une partie du collier, par exemple la traverse, peuvent par exemple être arrachés et doivent ainsi être remplacés par une équipe de maintenance des équipements réseau. Il peut également être nécessaire d'installer une nouvelle traverse pour accueillir de nouveaux câbles.

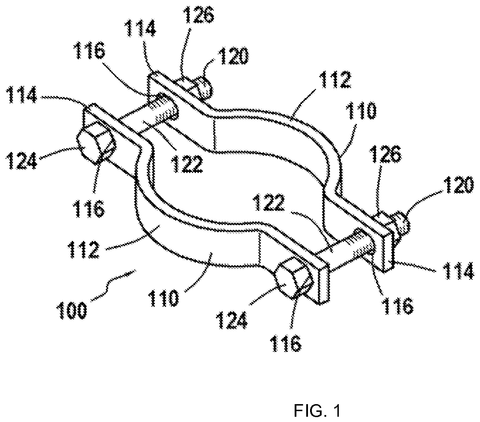

Un exemple de collier 100 de serrage est représenté en **figure** 1. Comme le montre cette figure 1, le collier 100 comprend deux parties de collier 110 et deux boulons 120. Chaque partie de collier 110 comprend une section en arc de cercle 112 et deux pattes 114, chaque patte 114 étant positionnée à une extrémité de la section en arc de cercle 112 et comprenant un orifice 116. De plus, chaque boulon 120 comprend une vis 122 comprenant une tête 124 et un écrou 126.

Afin de fixer le collier 100 au niveau de la partie supérieure d'un poteau, un opérateur doit être élevé au niveau de la partie supérieure du poteau. L'opérateur positionne alors les deux parties de collier 110 autour du poteau et insère la vis 122 d'un des boulons dans un des orifices 116 de chaque partie de collier 110 avant de visser l'écrou 126, de sorte que les deux parties de collier 110 soient retenues entre la tête 124 de la vis 122 et l'écrou 126.

L'opérateur serre ensuite le boulon 120 de sorte à rapprocher les deux parties de collier 110 entre elles et ainsi fixer le collier 100 sur le poteau.

L'opérateur répète ensuite ces opérations de l'autre côté, en insérant la vis 122 de l'autre boulon 120 dans les autres orifices 116. Un collier de serrage similaire est connu par WO 2018 088792 A2.

Le collier de serrage devant être positionné en hauteur, une échelle était traditionnellement utilisée afin d'élever l'opérateur, le haut de l'échelle étant positionné contre le poteau en bois. Cette pratique n'est toutefois plus recommandée et même parfois interdite pour des raisons de sécurité.

Plusieurs solutions existent afin de remplacer les interventions de maintenance utilisant une échelle.

La première solution est de remplacer le poteau en bois par un appui, par exemple en métal, de résistance mécanique compatible avec l'utilisation d'une échelle. Cependant, ce remplacement, qui implique d'acheminer l'appui parfois sur un terrain peu accessible, de démonter le poteau, monter l'appui et de gérer la fin de vie du poteau, est par conséquent une opération lourde, onéreuse et risquée, qui nécessite un matériel conséquent. Cette solution est ainsi peu utilisée du fait des nombreuses difficultés opérationnelles.

Une deuxième solution est d'utiliser une nacelle, par exemple une nacelle tout terrain, une nacelle araignée, ou encore une nacelle sur chenille, afin d'accéder à la partie supérieure du poteau. Cependant, la mise en place d'une telle nacelle nécessite la présence d'une zone dégagée aux alentours du poteau, ce qui rend l'utilisation de la nacelle impossible pour une grande proportion de poteaux. En outre, une telle opération peut prendre du temps, demande une logistique assez importante et le coût d'une telle opération est par conséquent assez élevé.

Une troisième solution apportée est l'utilisation d'une échelle autoportante pour accéder à la partie supérieure du poteau. Cependant, une telle échelle n'est pas facile à utiliser et son utilisation peut être non autorisée par la politique de sécurité d'une entreprise.

Il existe donc un besoin pour une solution permettant d'installer et de fixer un collier de serrage sur une partie supérieure d'un poteau de manière simple, sécurisée et peu coûteuse, même dans une zone difficile d'accès.

### Exposé de l'invention

La présente invention concerne un collier de serrage pour maintenir au moins un élément de réseau sur un poteau, ledit collier étant destiné à enserrer ledit poteau, ledit collier comprenant :
- des moyens de serrage aptes à resserrer le collier,
- des moyens de maintien dudit au moins un élément de réseau sur le poteau, caractérisé en ce que :
- le collier comprend en outre des moyens de positionnement du collier, étant adaptés pour raccorder le collier à un outil de positionnement, de sorte à pouvoir positionner le collier au moyen de l'outil de positionnement,
- les moyens de serrage sont configurés pour être actionnés au moyen d'un outil de serrage.

Les moyens de positionnement et de serrage permettant une manipulation à distance du collier, au moyen des outils de positionnement et de serrage qui prennent typiquement la forme de première et deuxième perches, le collier peut être fixé au poteau depuis le sol, plus précisément sur une partie supérieure du poteau. Il n'est ainsi plus nécessaire d'avoir recours à un moyen permettant à un opérateur de s'élever au niveau de la partie supérieure du poteau, tel qu'une échelle, un échafaudage ou encore une nacelle.

Le coût du positionnement de l'élément de réseau sur le poteau est ainsi fortement diminué.

De plus, le collier et les perches étant des équipements relativement légers et peu encombrants, il est possible d'accéder, par exemple à pied, à un poteau situé dans une zone difficile d'accès.

En outre, la configuration du collier de serrage permet d'améliorer la sécurité des opérateurs, en réduisant leurs efforts physiques et supprimant leur travail en hauteur. Par ailleurs, lorsque le collier de serrage est positionné au niveau d'une partie inférieure du poteau puis coulisse le long du poteau, une chute accidentelle du collier de serrage s'effectue en coulissant le long du poteau en sens inverse, limitant ainsi les risques pour les opérateurs qui se tiennent autour du poteau.

Dans un mode de réalisation particulier, les moyens de positionnement comprennent des moyens de prise aptes à être raccordés à des moyens de prise complémentaires de l'outil de positionnement positionnés à une extrémité de l'outil de positionnement, pour permettre une élévation du collier et/ou un maintien du collier en hauteur au moyen de l'outil de positionnement.

Ceci permet de sécuriser l'élévation du collier de serrage en évitant qu'il ne retombe lors de son élévation.

Le collier de serrage comprend en outre une première partie de collier et une deuxième partie de collier, les moyens de serrage étant aptes à rapprocher la première partie de collier et la deuxième partie de collier. Le collier de serrage peut ainsi être positionné par l'opérateur sur la partie inférieure du poteau en serrant de manière lâche les moyens de serrage, de sorte que le collier puisse coulisser le long du poteau, puis une fois positionné à la hauteur désirée être serré de manière solide, de sorte à fixer le collier. De plus, la structure du collier en deux parties de collier permet son installation par l'opérateur sur la partie inférieure du poteau.

Les moyens de serrage comprennent :
- des moyens de liaison des deux parties de collier,
- des moyens de saisie aptes à être saisis au moyen de l'outil de serrage,
- des moyens de transmission angulaire formant un joint de cardan entre les moyens de saisie et les moyens de liaison,
de sorte qu'une rotation des moyens de saisie au moyen de l'outil de serrage permette une rotation des moyens de liaison, la rotation des moyens de liaison rapprochant la première partie de collier et la deuxième partie de collier.

Ceci permet de fixer le collier de serrage sur la partie supérieure du poteau de manière simple et sécurisée, sans nécessiter des efforts physiques importants pour l'opérateur. Dans un mode de réalisation particulier, l'angle du joint de cardan entre les moyens de saisie et les moyens de liaison est apte à être ajusté au moyen de l'outil de serrage, de sorte à adapter le positionnement des moyens de saisie au positionnement de l'outil de serrage.

Ceci permet d'adapter le collier de serrage en fonction des environnements dans lesquels les opérateurs sont amenés à intervenir. La position de l'opérateur par rapport au poteau peut ainsi être prise en compte grâce à l'angle du joint de cardan. Dans un mode de réalisation particulier :
- les moyens de liaison comprennent au moins une tige filetée,
- les moyens de saisie comprennent au moins une poignée en forme d'anneau, apte à être saisie par un crochet positionné à l'extrémité de l'outil de serrage.

Dans un mode de réalisation particulier :
- au moins une partie de collier comprend une section centrale et au moins un écrou,
- ledit au moins un écrou s'étendant autour de ladite au moins une tige filetée,
- la section centrale étant reliée audit au moins un écrou au moyen d'une liaison pivot, la liaison pivot permettant d'ajuster ladite au moins une partie de collier autour du poteau.

Dans un mode de réalisation particulier, la section centrale comprend une partie en arc de cercle comprenant au moins une rainure de maintien.

La rainure de maintien permet de maintenir le collier contre le poteau après le serrage du collier.

Dans un mode de réalisation particulier :
- le joint de cardan est positionné à une première extrémité de ladite au moins une tige filetée,
- une butée amovible est fixée à une deuxième extrémité de ladite au moins une tige filetée,
de sorte que l'écrou est retenu sur ladite au moins une tige filetée, entre le joint de cardan et la butée amovible.

La butée permet d'éviter au collier de s'ouvrir si les moyens de serrage sont actionnés dans le mauvais sens, et permet en outre d'ouvrir le collier afin de le positionner autour du poteau.

Dans un mode de réalisation particulier, les moyens de serrage comprennent :
- une roue à cliquet comprenant une roue dentée fixée à une première extrémité du collier et au moins un cliquet fixé à une deuxième extrémité du collier,
- des moyens de saisie aptes à être saisis au moyen de l'outil de serrage,
- des moyens de transmission angulaire formant un joint de cardan entre les moyens de saisie et la roue dentée,
de sorte qu'une rotation des moyens de saisie au moyen de l'outil de serrage permette une rotation de la roue dentée, la rotation de la roue dentée resserrant le collier en accrochant ledit au moins un cliquet.

Dans un mode de réalisation particulier, les moyens de maintien comprennent une traverse, une platine d'accrochage, et/ou un anneau.

L'invention concerne de plus un système de positionnement d'au moins un élément de réseau sur un poteau, comprenant :
- un collier de serrage tel que décrit ci-dessus,
- l'outil de positionnement apte à positionner le collier, et
- l'outil de serrage apte à actionner les moyens de serrage du collier.

Le système utilisé pour positionner l'élément de réseau sur le poteau est ainsi ergonomique.

Les avantages énoncés pour le collier de serrage tel que décrit précédemment sont transposables directement au système de positionnement.

Dans un mode de réalisation particulier, l'outil de serrage est une perche dite deuxième perche, une première extrémité de la deuxième perche comprenant un crochet et une deuxième extrémité de la deuxième perche comprenant une manivelle. L'invention concerne en outre un procédé de positionnement d'au moins un élément de réseau sur un poteau, mis en oeuvre au moyen du système de positionnement tel que décrit ci-dessus, ledit procédé comprenant les étapes suivantes :
- raccordement des moyens de positionnement du collier à l'outil de positionnement, de sorte à positionner le collier,
- tout en maintenant la position du collier au moyen de l'outil de positionnement, actionnement des moyens de serrage du collier au moyen de l'outil de serrage, de sorte à resserrer le collier et ainsi fixer le collier au poteau.

Les avantages énoncés pour le collier de serrage tel que décrit précédemment sont transposables directement au procédé de positionnement.

Dans un mode de réalisation particulier, le procédé comprend en outre l'étape suivante :
- accrochage, au moyen de l'outil de positionnement ou d'un l'outil d'accrochage, dudit au moins un élément de réseau aux moyens de maintien du collier, afin de maintenir ledit au moins un élément de réseau sur le poteau.

### Brève description des dessins

D'autres caractéristiques et avantages de la présente invention ressortiront de la description faite ci-dessous, en référence aux dessins annexés qui en illustrent un exemple de réalisation dépourvu de tout caractère limitatif. Sur les figures :
- La figure 1 déjà décrite représente, de manière schématique, un collier de serrage connu ;
- Les figures 2A et 2B représentent, de manière schématique, un collier de serrage selon un exemple de mode de réalisation de l'invention ;
- La figure 3 représente, de manière schématique, un collier de serrage selon un autre exemple de mode de réalisation de l'invention ;
- La figure 4 représente, de manière schématique, une première perche d'un système de positionnement selon un exemple de mode de réalisation de l'invention ;
- La figure 5 représente, de manière schématique, une extrémité d'une deuxième perche d'un système de positionnement selon un exemple de mode de réalisation de l'invention ;
- La figure 6 représente, sous forme d'organigramme, les principales étapes d'un procédé de positionnement d'au moins un élément réseau sur un poteau, selon un exemple de mode de réalisation de l'invention ;
- La figure 7 représente, de manière schématique, un exemple de réalisation d'une étape de positionnement du procédé de la figure 6 ;
- La figure 8 représente, de manière schématique, un exemple de réalisation d'une étape de raccordement du procédé de la figure 6 ;
- La figure 9 représente, de manière schématique, un exemple de réalisation d'une étape d'actionnement du procédé de la figure 6 ;
- La figure 10 représente, de manière schématique, un exemple de réalisation d'une étape d'accrochage du procédé de la figure 6.
- La figure 11 représente, de manière schématique, un exemple de résultat d'une étape d'accrochage du procédé de la figure 6.

### Description des modes de réalisation

L'invention concerne un collier de serrage permettant de maintenir au moins un élément de réseau, tel qu'un câble, un support de câble et/ou une pince d'ancrage pour câble, sur un poteau. Par un poteau, on entend un poteau, ou plusieurs poteaux connectés les uns aux autres, par exemple deux poteaux moisés. Le collier de serrage est destiné à enserrer le poteau, c'est-à-dire entourer le poteau en le serrant, de sorte à être fixé solidairement au poteau. Le collier peut être en outre fixé en hauteur, sur une partie supérieure du poteau. La partie supérieure du poteau est typiquement une partie du poteau qui n'est pas à hauteur d'homme, c'est-à-dire une partie du poteau qu'un homme au sol ne peut pas atteindre sans outil adapté, tel qu'une perche.

Le poteau est par exemple un poteau en bois, et la section du poteau est typiquement arrondie. Le poteau peut être de forme légèrement conique, le diamètre du poteau au niveau du sol étant plus élevé que le diamètre du poteau au niveau de l'extrémité supérieure du poteau. Le diamètre du poteau est par exemple compris entre 76 millimètres et 220 millimètres pour des poteaux de type télécommunications. Aucune restriction n'est attachée à ce diamètre. Le collier de serrage proposé peut être adapté à différents diamètres de poteau. De plus, aucune restriction n'est attachée à la forme géométrique de la section du poteau. Le collier de serrage proposé peut ainsi facilement être adapté à d'autres formes, telles que carrée, rectangulaire, triangulaire, etc. Le collier de serrage peut aussi être adapté à la forme de la section d'un ensemble de poteaux connectés les uns aux autres.

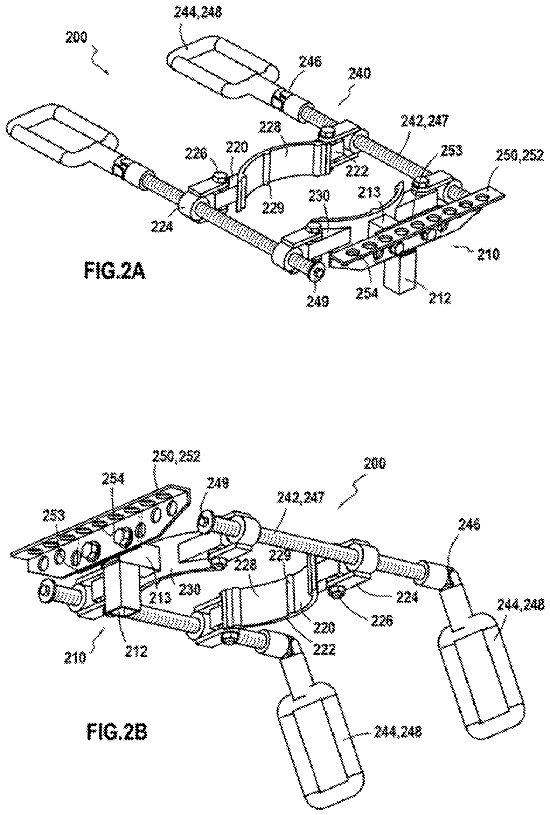

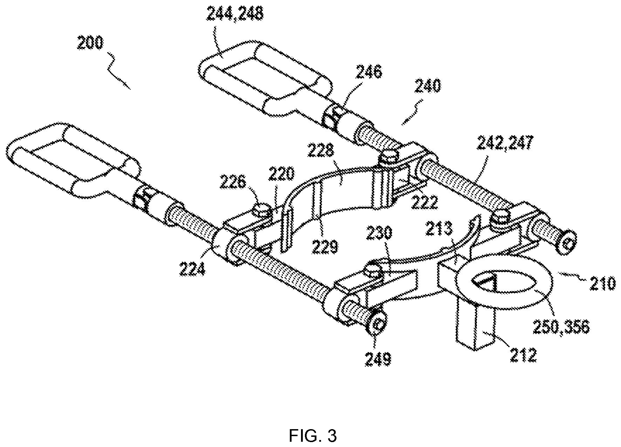

Les **figures 2A, 2B** **et** **3** représentent, de manière schématique, des exemples de modes de réalisation d'un collier 200 de serrage selon l'invention.

Comme visible sur ces figures 2A, 2B et 3, le collier 200 de serrage comprend des moyens de positionnement 210 du collier apte à positionner le collier 200 à la hauteur désirée sur le poteau, des moyens de serrage 240 aptes à resserrer le collier 200 autour du poteau, et des moyens de maintien 250 de l'élément de réseau.

Les moyens de positionnement 210 du collier sont plus précisément adaptés pour raccorder le collier 200 à un outil de positionnement, de sorte à pouvoir positionner le collier 200 à la hauteur désirée sur le poteau au moyen de l'outil de positionnement.

En outre, les moyens de serrage 240 sont configurés pour pouvoir être actionnés au moyen d'un outil de serrage, typiquement lorsque le collier 200 est maintenu à la hauteur désirée autour du poteau au moyen de l'outil de positionnement. Le positionnement et le serrage du collier 200 sont ainsi possibles à distance.

Plus précisément, les moyens de positionnement 210 du collier 200 comprennent des moyens de prise 212 pouvant être raccordés à des moyens de prise complémentaires de l'outil de positionnement, de sorte à permettre une élévation du collier 200 et un maintien en hauteur du collier 200 au moyen de l'outil de positionnement.

Les moyens de positionnement 210 sont typiquement fixés solidairement à une deuxième partie de collier 230, décrite plus en détails ci-dessous, par exemple au moyen d'un support 213.

Dans la suite de la description, on considère que l'outil de positionnement est une première perche et l'outil de serrage est une deuxième perche. Toutefois, un autre outil de positionnement, comprenant typiquement des moyens de prise complémentaires, et/ou un autre outil de serrage, étant apte à saisir et/ou tourner les moyens de saisie 244 du collier 200 décrits ci-après, pourraient être utilisés.

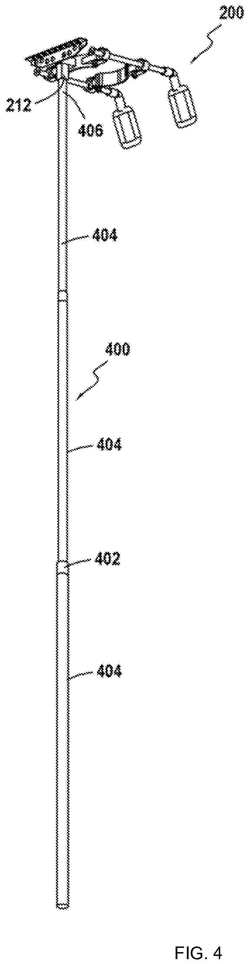

La **figure 4** montre un exemple de première perche 400, apte à positionner le collier 200 et à être manipulée par un opérateur. Comme visible sur cette figure 4, la première perche 400 est typiquement une perche télescopique, le corps 402 de la première perche 400 comprenant plusieurs tronçons 404 s'emboitant et coulissant les uns dans les autres. Les tronçons 404 du corps 402 de la première perche 400 peuvent ainsi être déployés lors du positionnement du collier 200, et repliés après l'utilisation de la première perche 400.

Les moyens de prise 212 prennent typiquement la forme d'une cavité 212, typiquement reliée solidairement à un support 213, relié solidairement à une deuxième partie de collier 230 décrite plus en détails ci-après. La cavité 212 peut par exemple prendre la forme d'un tube creux, typiquement de forme parallélépipédique.

La cavité 212 est configurée pour accueillir l'extrémité 406 de la première perche 400. Les moyens de prise complémentaires de la première perche 400 comprennent alors une saillie ayant une forme adaptée pour s'insérer dans la cavité, cette forme étant typiquement parallélépipédique. Les bords externes de la saillie de la première perche 400 peuvent alors appuyer sur le fond et/ou le bord interne de la cavité des moyens de prise 212 du collier 200.

En variante, les moyens de prise 212 comprennent une saillie, les moyens de prise complémentaires de la première perche 400, positionnés à une extrémité 406 de la première perche 400 pouvant alors comprendre une cavité apte à recevoir la saillie, le fond et/ou le bord interne de la cavité pouvant alors appuyer sur les bords externes de la saillie afin de permettre le levage du collier 200 et/ou son maintien en hauteur autour du poteau.

Les moyens de prise complémentaires de la première perche 400 peuvent former un premier embout amovible apte à être positionné à l'extrémité 406 de la première perche 400. Le premier embout amovible a ainsi une forme adaptée pour être raccordé aux moyens de prise 212 du collier 200, et peuvent ainsi comprendre la saillie ou la cavité de la première perche 400.

Un deuxième embout amovible peut être positionné à l'extrémité 406 de la première perche 400 à la place du premier embout amovible, le deuxième embout amovible comprenant des moyens d'accrochage pouvant typiquement prendre la forme d'un crochet permettant d'accrocher et de décrocher un élément de réseau aux moyens de maintien 250 du collier 200, le crochet étant par exemple en forme en S.

Des moyens de verrouillage (non représentés) peuvent être utilisés afin de verrouiller la connexion entre le premier embout amovible et/ou le deuxième embout amovible et le corps 402 de la première perche 400.

Le corps de la première perche 400 est typiquement en fibre de verre, assurant ainsi une haute isolation électrique.

En variante, lorsque les moyens de prise complémentaires de la première perche 400 sont fixés solidairement au corps 402 de la première perche 400, un outil d'accrochage tel qu'une troisième perche peut comprendre à une de ses extrémités les moyens d'accrochage.

En variante, les moyens de prise complémentaires de la première perche 400 et les moyens d'accrochage prennent la forme d'un même crochet, typiquement en forme de S.

Le collier 200 comprend une première partie de collier 220 et une deuxième partie de collier 230, les moyens de serrage 240 du collier 220 étant ainsi aptes à rapprocher la première partie de collier 220 et la deuxième partie de collier 230 pour enserrer le poteau.

Au moins une partie de collier 220, 230 peut comprendre une section centrale 222 et au moins un écrou 224, la section centrale 222 étant reliée à l'écrou 224 au moyen d'une liaison pivot 226, la liaison pivot permettant d'ajuster la partie de collier 220, 230 autour du poteau lors du serrage du collier 200.

Plus précisément, l'axe de rotation est typiquement parallèle à l'axe du poteau lorsque le collier 200 enserre le poteau. Comme le montrent les figures 2A, 2B et 3, la liaison pivot comprend au moins une patte (typiquement deux pattes), chaque patte comprenant un orifice, un orifice ménagé à une extrémité de la section centrale, et une tige s'étendant au travers de l'orifice de chaque patte et de l'orifice de la section centrale 222.

En outre, comme le montrent les figures 2A, 2B et 3, chaque partie de collier 220, 230 comprend typiquement une section centrale 222 et deux écrous 224, chaque extrémité de la section centrale 222 étant reliée à un écrou 224 différent au moyen d'une liaison pivot 226. La liaison pivot 226 permet d'ajuster la partie de collier 220, 230 autour du poteau, lors du serrage du collier 200. Chaque section centrale 222 peut aussi comprendre une partie 228 en arc de cercle, cette partie 228 étant ainsi adaptée pour entourer un poteau de section arrondie. Dans un mode de réalisation particulier, la partie 228 comprend typiquement au moins une rainure 229 de maintien, par exemple une pluralité de rainure 229 de maintien, chaque rainure 229 de maintien étant destinée à entrer en contact avec le poteau lors du serrage du collier 200, et maintenir le collier contre le poteau après le serrage du collier 200.

Les moyens de serrage 240 comprennent des moyens de liaison 242 des deux parties de collier 220 et 230, des moyens de saisie 244 aptes à être saisis au moyen de la deuxième perche, et des moyens de transmission angulaire 246 formant un joint de cardan entre les moyens de saisie 244 et les moyens de liaison 242.

Une rotation des moyens de saisie 244 au moyen de la deuxième perche permet ainsi une rotation des moyens de liaison 242, la rotation des moyens de liaison 242 étant transmise aux moyens de liaison 242 par le joint de cardan 246 de sorte à rapprocher la première partie de collier 220 et la deuxième partie de collier 230.

Comme visible sur la figure 2B, l'angle du joint de cardan 246 entre les moyens de saisie 244 et les moyens de liaison 242 est typiquement ajustable, par exemple au moyen de la deuxième perche, de sorte à adapter le positionnement des moyens de saisie 244 au positionnement de la deuxième perche.

Les moyens de liaison 242 comprennent typiquement au moins une tige filetée 247 autour de laquelle peut s'étendre ledit au moins un écrou 224, et les moyens de saisie 244 peuvent comprendre au moins une poignée 248 en forme d'anneau, apte à être saisie par un crochet positionné à l'extrémité de la deuxième perche.

L'anneau de la poignée 248 est une forme fermée pouvant être circulaire, rectangulaire (voir figures 2A, 2B et 3), ou encore triangulaire.

De plus, le joint de cardan 246 est typiquement positionné à une première extrémité de ladite au moins une tige filetée 247, et une butée amovible 249 peut être fixée, de manière amovible, à une deuxième extrémité de ladite au moins une tige filetée 247, de sorte que l'écrou 224 est retenu sur la tige filetée 247, entre le joint de cardan 246 et la butée amovible 249.

La butée permet d'éviter au collier 200 de s'ouvrir si les moyens de serrage 240 sont actionnés dans le mauvais sens, et permet en outre d'ouvrir le collier 200 afin de le positionner autour du poteau, notamment au niveau d'une partie inférieure du poteau. Par partie inférieure du poteau, on entend une partie du poteau située à hauteur d'homme.

Comme le montrent les figures 2A, 2B et 3, les moyens de liaison 244 comprennent ainsi typiquement une première et une deuxième tiges filetées 247, la première partie de collier 220 comprend un premier écrou 224 et un deuxième écrou 224, et la deuxième partie de collier 230 comprend un troisième écrou 224 et un quatrième écrou 224.

Le premier écrou 224 de la première partie de collier 220 s'étend autour de la première tige filetée tandis que le deuxième écrou 224 de la première partie de collier 220 s'étend autour de la deuxième tige filetée. De même, le troisième écrou 224 de la deuxième partie de collier 230 s'étend autour de la première tige filetée tandis que le quatrième écrou 224 de la deuxième partie de collier 230 s'étend autour de la deuxième tige filetée. Ainsi, chaque tige filetée 247 relie un écrou 224 de la première partie de collier 220 à un écrou 224 de la deuxième partie de collier 230. Plus précisément, la première tige filetée relie le premier écrou 224 au troisième écrou 224, et la deuxième tige filetée relie le deuxième écrou 224 au quatrième écrou 224.

On comprend ainsi que dans ce mode de réalisation, deux écrous 224 sont positionnés sur chacune des tiges filetées. Pour chacune des tiges filetées, un des écrous 224 comprend un pas de vis dans un sens standard de serrage et l'autre écrou 224 comprend quant à lui un pas de vis dans le sens inversé à ce sens standard. Dans un mode de réalisation particulier, les deux écrous 224 de la première partie du collier 220 sont en pas de vis inversé.

La longueur des deux tiges filetées 247 est par exemple identique, et est définie en fonction du diamètre du poteau autour duquel le collier peut être fixé.

En outre, les moyens de saisie 244 comprennent deux poignées 248, chaque poignée 248 étant reliée à une tige filetée par un joint de cardan 246 différent.

Les écrous 224 s'étendant autour d'une même tige filetée 247 sont ainsi typiquement retenus sur la tige filetée 247 entre le joint de cardan 246 associé et la butée amovible 249 associée.

En variante, à la place des moyens de liaison 244, les moyens de serrage 240 comprennent une roue à cliquet (non représentée) comprenant une roue dentée fixée à une première extrémité du collier et au moins un cliquet fixé solidairement à une deuxième extrémité du collier.

Les moyens de transmission angulaire forment alors un joint de cardan entre les moyens de saisie et la roue dentée, de sorte qu'une rotation des moyens de saisie au moyen de la deuxième perche permette une rotation de la roue dentée, la rotation de la roue dentée resserrant le collier 200 en accrochant ledit au moins un cliquet.

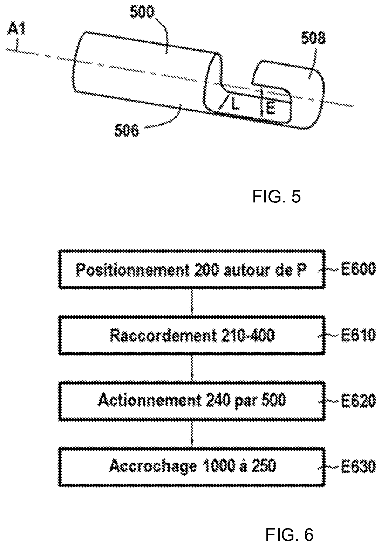

La **figure 5** montre un exemple d'une extrémité d'une deuxième perche 500, apte à actionner les moyens de serrage 240 du collier 200 et apte à être manipulée par un opérateur. La deuxième perche 500 peut comprendre à son extrémité 506 des moyens de saisie tels qu'un crochet 508. Comme le montre la figure 5, le crochet 508 est typiquement formé par une encoche, par exemple en forme de « L », au niveau de l'extrémité 506 de la deuxième perche 500.

Les dimensions du crochet 508 sont définies de sorte à permettre au crochet 508 de saisir chaque poignée 248 et de la tourner sans difficulté. La largeur L du crochet 508 est par exemple égale au diamètre du corps de la deuxième perche 500, et l'épaisseur E du crochet 508 est par exemple égale à l'épaisseur de l'anneau de chaque poignée 248, à laquelle un jeu est ajouté.

La deuxième perche 500 peut comprendre des moyens de rotation permettant la rotation des moyens de saisie de la deuxième perche 500 autour de l'axe A1 défini par le corps de la deuxième perche 500, tels qu'une manivelle.

La deuxième perche 500 peut comprendre une pluralité de tronçons, typiquement fixes les uns par rapport aux autres, afin de présenter une meilleure rigidité pour assurer le couple de serrage nécessaire. Chaque tronçon est par exemple long de de 1,5 mètre. Un tronçon dit supérieur, positionné à l'extrémité de la deuxième perche, comprend alors les moyens de saisie, tandis qu'un tronçon dit inférieur, apte à être manipulé par l'opérateur, peut comprendre les moyens de rotation et/ou une rondelle en relief permettant de faciliter la tenue de la perche.

En variante, la deuxième perche 500 peut être télescopique, sa longueur pouvant ainsi être ajustée à la hauteur désirée.

Le corps de la deuxième perche 500 est typiquement en aluminium et comprend des jonctions en plastique pour permettre une isolation électrique.

Comme le montrent les figures 2A et 2B, les moyens de maintien 250 du collier 200 peuvent comprendre une platine d'accrochage 253 sur laquelle une traverse 252 peut être fixée, typiquement solidairement. En variante, les moyens de maintien 250 du collier 200 peuvent comprendre uniquement la traverse 252.

La traverse 252 comprend typiquement un ou plusieurs orifices 254. En variante, comme le montre la figure 3, les moyens de maintien 250 peuvent comprendre un anneau 356.

Les moyens de maintien 250 sont typiquement fixés solidairement à la deuxième partie de collier 230, par exemple au moyen du support 213 reliant aussi la deuxième partie de collier 230 aux moyens de positionnement 210.

La **figure 6** représente un procédé de positionnement d'au moins un élément de réseau sur un poteau, conforme à un exemple de mode de réalisation de l'invention. Ce procédé est mis en oeuvre par un système de positionnement conforme à un exemple de mode de réalisation de l'invention.

Le système de positionnement comprend un collier de serrage conforme à un exemple de mode de réalisation de l'invention, tel que le collier 200 des figures 2A et 2B ou le collier 200 de la figure 3. Le système de positionnement comprend en outre un outil de positionnement apte à positionner le collier, tel qu'une première perche, par exemple la première perche 400 de la figure 4, et un outil de serrage apte à actionner les moyens de serrage du collier, tel qu'une deuxième perche, par exemple la deuxième perche 500 de la figure 5.

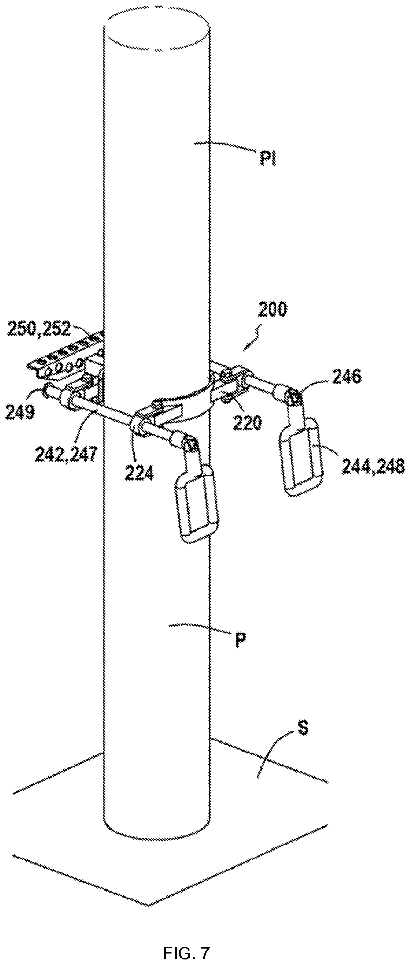

Dans une étape de positionnement E600, le collier 200 est positionné autour du poteau P, plus précisément sur la partie inférieure Pl du poteau, c'est-à-dire une partie du poteau P située à hauteur d'homme (voir aussi **figure 7****).**

Par exemple, lorsque le collier 200 comprend une première partie de collier 220 et une deuxième partie de collier 230, la première partie de collier 220 et la deuxième partie de collier 230 sont positionnées contre le poteau P au niveau de la partie inférieure Pl du poteau P. Plus précisément, la partie 228 en arc de cercle de chaque partie de collier 220 et 230 peut être positionnée contre le poteau P de sorte que le poteau P soit positionné à l'intérieur de ces parties 228 en arc de cercle.

Les moyens de serrage 240 sont aussi positionnés de sorte que les moyens de liaison 242 des deux parties de collier 220 et 230 relient la première partie de collier 220 à la deuxième partie de collier 230. Chaque tige filetée 247 des moyens de liaison 242 est ainsi typiquement visée dans un écrou 224 de la première partie de collier 220 et un écrou 224 de la deuxième partie de collier 230, de sorte que la première partie de collier 220, la deuxième partie de collier 230 et la ou les tiges filetées 247 entourent le poteau P en formant une structure fermée, sans enserrer le poteau P, de manière à pouvoir coulisser sur le poteau P.

Une butée amovible 249 peut ensuite être fixée, de manière amovible, à la deuxième extrémité de chaque tige filetée 247, de sorte que l'écrou 224 de la première partie de collier 220 et l'écrou 224 de la deuxième partie de collier 230 s'étendant autour de cette tige filetée 247 sont retenus sur la tige filetée 247 entre le joint de cardan 246 et la butée amovible 249.

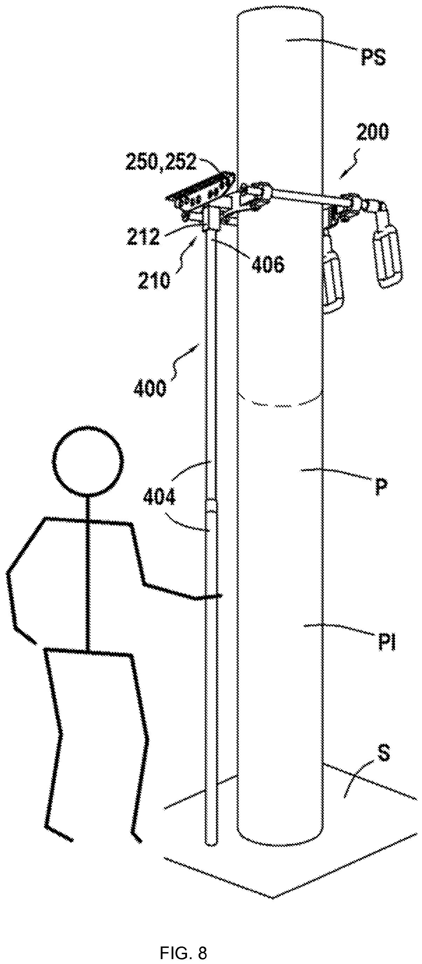

Dans une étape de raccordement E610, les moyens de positionnement 210 du collier 200 sont raccordés à la première perche 400, de sorte à positionner le collier 200 en hauteur autour du poteau P (voir aussi **figure 8**).

Les moyens de prise complémentaires de la première perche 400 sont raccordés aux moyens de prise 212 du collier 200, le raccordement entre la première perche 400 et le collier 200 permettant à la première perche de lever le collier 200 vers le haut du poteau P jusqu'à ce que le collier 200 soit positionné autour de la partie supérieure PS du poteau P, et permettant en outre de maintenir en hauteur le collier 200 autour le poteau P.

Ainsi, lorsque les moyens de prise 212 du collier 200 prennent la forme d'une cavité 212, la saillie de la première perche 400 est typiquement insérée dans la cavité des moyens de prise 212 du collier 200 , les bords externes de la saillie de la première perche 400 pouvant alors appuyer sur le fond et/ou le bord interne de la cavité des moyens de prise 212 du collier 200, afin de permettre le levage du collier 200 et/ou son maintien en hauteur autour du poteau.

En variante, lorsque les moyens de prise 212 du collier 200 comprennent une saillie, la saillie est insérée dans la cavité de la première perche 400, le fond et/ou le bord interne de la cavité pouvant alors appuyer sur les bords externes de la saillie.

Le collier 200 est typiquement levé en déployant les tronçons 404 du corps de la première perche 400.

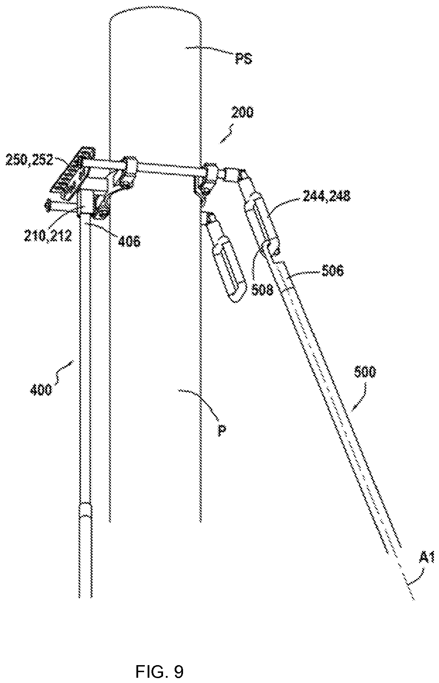

Dans une étape d'actionnement E620, tout en maintenant la position du collier 200 en hauteur autour du poteau P au moyen de la première perche 400, les moyens de serrage 240 du collier 200 sont actionnés au moyen de la deuxième perche 500, de sorte à resserrer le collier 200 et ainsi fixer le collier 200 au poteau P (voir aussi **figure 9**).

Plus précisément, lorsque les moyens de serrage 240 comprennent des moyens de liaison 242, les moyens de saisie 244 des moyens de serrage 240 sont saisis par les moyens de saisie 508 de la deuxième perche 500. Les moyens de saisie de la deuxième perche 500 entrent ensuite en rotation, cette rotation étant transmise aux moyens de saisie 244 des moyens de serrage 240 du collier 200. La rotation des moyens de saisie 244 du collier 200 est alors transmise aux moyens de liaison 242 par les moyens de transmission angulaire 246. La rotation des moyens de liaison 242 rapproche alors la première partie de collier 220 et la deuxième partie de collier 230. Par exemple, lorsque les moyens de saisie 244 comprennent deux poignées en forme d'anneau, le crochet 508 de la deuxième perche 500 saisit l'anneau d'une des poignées 248, appelée première poignée 248.

Les moyens de rotation de la deuxième perche 500 permettent ensuite la rotation du crochet 508 autour de l'axe A1 défini par le corps de la deuxième perche 500.

La rotation du crochet 508 est transmise à la première poignée 248, la rotation de la première poignée 248 étant alors transmise à la tige filetée 247 associée à la première poignée 248 par le joint de cardan 246 reliant la première poignée 248 à la tige filetée 247. La rotation de la tige filetée 247 est effectuée autour de l'axe défini par le corps de la tige filetée.

La rotation de la tige filetée 247 rapproche l'écrou 224 de la première partie de collier 220 et l'écrou 224 de la deuxième partie de collier 230, ce qui permet de serrer le collier 200 autour du poteau. En effet, l'écrou 224 de la première partie de collier 220 et l'écrou 224 de la deuxième partie de collier 230 étant chacun dans un sens de pas de vis contraire, une rotation de la tige filetée permet le rapprochement des deux parties de collier 220 et 230.

Le crochet 508 saisit ensuite l'anneau de l'autre poignée 248, appelée deuxième poignée 248, la rotation du crochet 508 permettant de la même manière de rapprocher l'écrou 224 de la première partie de collier 220 et l'écrou 224 de la deuxième partie de collier 230 s'étendant autour de l'autre tige filetée 247.

La rotation de la première poignée 248 et/ou la rotation de la deuxième poignée 248 peuvent être réitérées afin de serrer davantage le collier 200 autour du poteau.

En variante, lorsque les moyens de serrage 240 comprennent une roue à cliquet, la rotation des moyens de saisie 244 du collier 200 est transmise à la roue dentée par les moyens de transmission angulaire 246, la rotation de la roue dentée resserrant le collier 200 en accrochant ledit au moins un cliquet.

Dans une étape d'accrochage E630, le ou les éléments de réseau sont accrochés au moyen de la première perche 400 ou de la troisième perche (l'outil d'accrochage), aux moyens de maintien 250 du collier 200, afin de maintenir chaque élément de réseau sur le poteau.

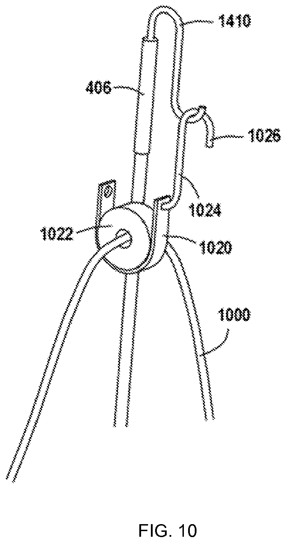

Plus précisément, lorsque les moyens de maintien 250 du collier 200 comprennent une traverse 252, les éléments de réseau 1000 peuvent comprendre un câble 1000 et/ou un support 1020 de câble (voir **figure 10**).

Le support 1020 est typiquement attaché à un crochet 1410 en forme de S de la première perche 400 ou de la troisième perche. Le support 1020 peut en effet comprendre des moyens de maintien 1022 pour maintenir le câble 1000, et des moyens de maintien 1024 du support 1020 à la traverse 252, les moyens de maintien 1024 du support 1020 prenant typiquement la forme d'une tige recourbée à au moins une de ses deux extrémités 1026, et fixée aux moyens de maintien 1022 du câble 1000.

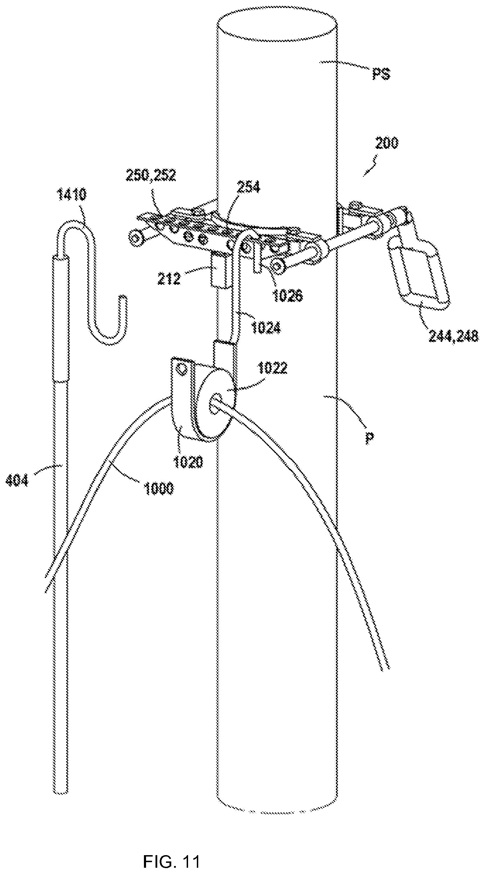

Le crochet 1410 est ensuite levé, par exemple en déployant les tronçons 404 de la première perche 400 ou de la troisième perche au niveau de la traverse 252, puis les moyens de maintien 1024 du support 1020 sont accrochés à la traverse 252 (voir **figure 11****).** Par exemple, au moins une extrémité 1026 recourbée des moyens de maintien 1024 du support 1020 est insérée au moyen de la perche dans un orifice 254 de la traverse 252, de sorte à maintenir le câble 1000 et le support 1020 sur le poteau P.

En variante, lorsque les moyens de maintien 250 du collier 200 comprennent un anneau 356, les éléments de réseau peuvent comprendre une pince d'ancrage pour câble (non représentée) et un câble, la pince d'ancrage permettant la création d'une tension mécanique du câble.

Les modes de réalisation ont été décrits pour un collier de serrage comprenant deux parties de collier. On comprend que d'autres formes de réalisation peuvent également être envisagées. Par exemple, une extrémité de la première partie de collier peut être fixée solidairement à une extrémité de la deuxième partie de collier (les deux extrémités pouvant par exemple venir de matière), l'autre extrémité de la première partie de collier et l'autre extrémité de la deuxième partie de collier pouvant être serrées, typiquement par l'intermédiaire des moyens de serrage décrits précédemment, et ainsi rapprocher la première partie de collier et la deuxième partie de collier. Pour d'autres formes de poteau, par exemple pour les poteaux moisés, le collier de serrage peut comprendre un nombre de parties supérieur à deux.

Les modes de réalisation ont été décrits avec un positionnement du collier de serrage en partie inférieure du poteau puis un levage du collier en partie supérieure du poteau au moyen de la première perche. D'autres modes de réalisation peuvent être envisagés. Il s'agit par exemple de lever le collier de serrage hors du poteau, puis de le positionner par le haut sur l'extrémité supérieure du poteau, coiffant ainsi le poteau.

## Revendications

1. Collier (200) de serrage pour maintenir au moins un élément de réseau (1000) sur un poteau (P), ledit collier étant destiné à enserrer ledit poteau (P), ledit collier comprenant :
- des moyens de serrage (240) aptes à resserrer le collier,
- des moyens de maintien (250) dudit au moins un élément de réseau (1000) sur le poteau (P), où
- le collier comprend en outre des moyens de positionnement (210) du collier, étant adaptés pour raccorder le collier à un outil de positionnement (400), de sorte à pouvoir positionner le collier au moyen de l'outil de positionnement (400),
- le collier comprend en outre une première partie de collier (220) et une deuxième partie de collier (230) ;
- les moyens de serrage (240) sont aptes à rapprocher la première partie de collier (220) et la deuxième partie de collier (230) et sont configurés pour être actionnés au moyen d'un outil de serrage (500), lesdits moyens de serrage (240) comprenant :
- des moyens de liaison (242) des deux parties de collier,
- des moyens de saisie (244) aptes à être saisis au moyen de l'outil de serrage (500),
**caractérisé en ce que** lesdits moyens de serrage (240) comprennent
- des moyens de transmission angulaire (246) formant un joint de cardan entre les moyens de saisie (244) et les moyens de liaison (242),
de sorte qu'une rotation des moyens de saisie (244) au moyen de l'outil de serrage (500) permette une rotation des moyens de liaison (242), la rotation des moyens de liaison (242) rapprochant la première partie de collier (220) et la deuxième partie de collier (230).

2. Collier de serrage selon la revendication 1, dans lequel les moyens de positionnement (210) comprennent des moyens de prise (212) aptes à être raccordés à des moyens de prise complémentaires de l'outil de positionnement (400) positionnés à une extrémité (406) de l'outil de positionnement (400), pour permettre une élévation du collier et/ou un maintien du collier en hauteur au moyen de l'outil de positionnement (400).

3. Collier de serrage selon la revendication 1 ou la revendication 2, dans lequel l'angle du joint de cardan (246) entre les moyens de saisie (244) et les moyens de liaison (242) est apte à être ajusté au moyen de l'outil de serrage (500), de sorte à adapter le positionnement des moyens de saisie (244) au positionnement de l'outil de serrage (500).

4. Collier de serrage selon l'une quelconque des revendications 1 à 3, dans lequel :
- les moyens de liaison (242) comprennent au moins une tige filetée (247),
- les moyens de saisie (244) comprennent au moins une poignée (248) en forme d'anneau, apte à être saisie par un crochet (508) positionné à l'extrémité de l'outil de serrage (500).

5. Collier de serrage selon la revendication 4, dans lequel :
- au moins une partie de collier (220, 230) comprend une section centrale (222) et au moins un écrou (224),
- ledit au moins un écrou (224) s'étendant autour de ladite au moins une tige filetée (247),
- la section centrale (222) étant reliée audit au moins un écrou (224) au moyen d'une liaison pivot (226), la liaison pivot (226) permettant d'ajuster ladite au moins une partie de collier (220, 230) autour du poteau (P).

6. Collier de serrage selon la revendication 5, dans lequel la section centrale (222) comprend une partie (228) en arc de cercle comprenant au moins une rainure (229) de maintien.

7. Collier de serrage selon l'une quelconque des revendications 4 à 6, dans lequel :
- le joint de cardan (246) est positionné à une première extrémité de ladite au moins une tige filetée (247),
- une butée amovible (249) est fixée à une deuxième extrémité de ladite au moins une tige filetée (247),
de sorte que l'écrou est retenu sur ladite au moins une tige filetée (247), entre le joint de cardan (246) et la butée amovible (249).

8. Collier de serrage selon l'une quelconque des revendications 1 à 7, dans lequel les moyens de maintien (250) comprennent une traverse (252), une platine d'accrochage (253), et/ou un anneau (356).

9. Système de positionnement d'au moins un élément de réseau (1000) sur un poteau (P), comprenant :
- un collier (200) de serrage selon l'une quelconque des revendications 1 à 8,
- l'outil de positionnement (400) apte à positionner le collier (200), et
- l'outil de serrage (500) apte à actionner les moyens de serrage (240) du collier.

10. Système de positionnement selon la revendication 9, dans lequel l'outil de serrage (500) est une perche (500) dite deuxième perche (500), une première extrémité de la deuxième perche (500) comprenant un crochet (508) et une deuxième extrémité de la deuxième perche (500) comprenant une manivelle.

11. Procédé de positionnement d'au moins un élément de réseau (1000) sur un poteau (P), mis en oeuvre au moyen du système de positionnement selon la revendication 9 ou 10, ledit procédé comprenant les étapes suivantes :
- raccordement (E610) des moyens de positionnement (210) du collier à l'outil de positionnement (400), de sorte à positionner le collier (200),
- tout en maintenant la position du collier (200) au moyen de l'outil de positionnement (400), actionnement (E620) des moyens de serrage (240) du collier au moyen de l'outil de serrage (500), de sorte à resserrer le collier (200) et ainsi fixer le collier (200) au poteau (P).

12. Procédé de positionnement selon la revendication 11, comprenant en outre l'étape suivante :
- accrochage (E630), au moyen de l'outil de positionnement (400) ou d'un outil d'accrochage, dudit au moins un élément de réseau (1000) aux moyens de maintien (250) du collier, afin de maintenir ledit au moins un élément de réseau (1000) sur le poteau (P).

## Patentansprüche

1. Klemmring (200) zum Halten mindestens eines Netzelements (1000) an einem Mast (P), wobei der Klemmring dazu bestimmt ist, den Mast (P) zu umspannen, wobei der Klemmring umfasst:
- Spannmittel (240), die geeignet sind, den Klemmring festzuziehen,
- Mittel zum Halten (250) des mindestens eines Netzelements (1000) am Mast (P),
wobei
- der Klemmring außerdem Mittel zur Positionierung (210) des Klemmringes umfasst, die dazu eingerichtet sind, den Klemmring mit einem Positionierungswerkzeug (400) zu verbinden, um den Klemmring mittels des Positionierungswerkzeugs (400) positionieren zu können,
- der Klemmring außerdem einen ersten Klemmringteil (220) und einen zweiten Klemmringteil (230) umfasst,
- die Spannmittel (240) geeignet sind, den ersten Klemmringteil (220) und den zweiten Klemmringteil (230) einander anzunähern, und dafür ausgelegt sind, mittels eines Spannwerkzeugs (500) betätigt zu werden, wobei die Spannmittel (240) umfassen:
- Mittel zur Verbindung (242) der zwei Klemmringteile,
- Erfassungsmittel (244), die geeignet sind, mittels des Spannwerkzeugs (500) erfasst zu werden,
**dadurch gekennzeichnet, dass** die Spannmittel (240) umfassen:
- Winkelübertragungsmittel (246), die ein Kreuzgelenk zwischen den Erfassungsmitteln (244) und den Verbindungsmitteln (242) bilden,
derart, dass eine Drehung der Erfassungsmittel (244) mittels des Spannwerkzeugs (500) eine Drehung der Verbindungsmittel (242) ermöglicht, wobei die Drehung der Verbindungsmittel (242) den ersten Klemmringteil (220) und den zweiten Klemmringteil (230) einander annähert.

2. Klemmring nach Anspruch 1, wobei die Positionierungsmittel (210) Eingriffsmittel (212) umfassen, die geeignet sind, mit komplementären Eingriffsmitteln des Positionierungswerkzeugs (400), die an einem Ende (406) des Positionierungswerkzeugs (400) positioniert sind, verbunden zu werden, um ein Heben des Klemmringes und/oder ein Halten des Klemmringes auf seiner Höhe mittels des Positionierungswerkzeugs (400) zu ermöglichen.

3. Klemmring nach Anspruch 1 oder Anspruch 2, wobei der Winkel des Kreuzgelenks (246) zwischen den Erfassungsmitteln (244) und den Verbindungsmitteln (242) mittels des Spannwerkzeugs (500) verstellbar ist, um die Positionierung der Erfassungsmittel (244) an die Positionierung des Spannwerkzeugs (500) anzupassen.

4. Klemmring nach einem der Ansprüche 1 bis 3, wobei:
- die Verbindungsmittel (242) mindestens einen Gewindestift (247) umfassen,
- die Erfassungsmittel (244) mindestens einen ringförmigen Griff (248) umfassen, der von einem Haken (508) erfasst werden kann, der am Ende des Spannwerkzeugs (500) positioniert ist.

5. Klemmring nach Anspruch 4, wobei:
- mindestens ein Klemmringteil (220, 230) einen mittleren Abschnitt (222) und mindestens eine Mutter (224) umfasst,
- die mindestens eine Mutter (224) sich um den mindestens einen Gewindestift (247) erstreckt,
- der mittlere Abschnitt (222) mit der mindestens einen Mutter (224) mittels einer Schwenkverbindung (226) verbunden ist, wobei die Schwenkverbindung (226) ermöglicht, den mindestens einen Klemmringteil (220, 230) um den Mast (P) herum zu verstellen.

6. Klemmring nach Anspruch 5, wobei der mittlere Abschnitt (222) einen kreisbogenförmigen Teil (228) umfasst, der mindestens eine Haltenut (229) umfasst.

7. Klemmring nach einem der Ansprüche 4 bis 6, wobei:
- das Kreuzgelenk (246) an einem ersten Ende des mindestens einen Gewindestiftes (247) positioniert ist,
- ein lösbarer Anschlag (249) an einem zweiten Ende des mindestens einen Gewindestiftes (247) befestigt ist,
derart, dass die Mutter auf dem mindestens einen Gewindestift (247) zwischen dem Kreuzgelenk (246) und dem lösbaren Anschlag (249) gehalten wird.

8. Klemmring nach einem der Ansprüche 1 bis 7, wobei die Haltemittel (250) eine Querstrebe (252), eine Einhängeplatte (253) und/oder ein Ring (356) umfassen.

9. System zur Positionierung mindestens eines Netzelements (1000) an einem Mast (P), umfassend:
- einen Klemmring (200) nach einem der Ansprüche 1 bis 8,
- das Positionierungswerkzeug (400), das geeignet ist, den Klemmring (200) zu positionieren, und
- das Spannwerkzeug (500), das geeignet ist, die Spannmittel (240) des Klemmringes zu betätigen.

10. Positionierungssystem nach Anspruch 9, wobei das Spannwerkzeug (500) eine Stange (500) ist, zweite Stange (500) genannt, wobei ein erstes Ende der zweiten Stange (500) einen Haken (508) umfasst und ein zweites Ende der zweiten Stange (500) eine Kurbel umfasst.

11. Verfahren zur Positionierung mindestens eines Netzelements (1000) an einem Mast (P), welche mittels des Positionierungssystems nach Anspruch 9 oder 10 durchgeführt wird, wobei das Verfahren die folgenden Schritte umfasst:
- Verbinden (E610) der Positionierungsmittel (210) des Klemmringes mit dem Positionierungswerkzeug (400), um den Klemmring (200) zu positionieren,
- unter Beibehaltung der Position des Klemmringes (200) mittels des Positionierungswerkzeugs (400), Betätigen (E620) der Spannmittel (240) des Klemmringes mittels des Spannwerkzeugs (500), um den Klemmring (200) festzuziehen und somit den Klemmring (200) am Mast (P) zu befestigen.

12. Positionierungsverfahren nach Anspruch 11, welches außerdem den folgenden Schritt umfasst:
- Einhängen (E630), mittels des Positionierungswerkzeugs (400) oder eines Einhängewerkzeugs, des mindestens einen Netzelements (1000) an den Haltemitteln (250) des Klemmringes, um das mindestens eine Netzelement (1000) am Mast (P) zu halten.

## Claims

1. Clamping collar (200) for holding at least one network element (1000) on a post (P), said collar being intended to grip said post (P), said collar comprising:
- tightening means (240) that are able to tighten the collar,
- holding means (250) for holding said at least one network element (1000) on the post (P),
wherein
- the collar also comprises positioning means (210) for positioning the collar, which are designed to connect the collar to a positioning tool (400), so as to be able to position the collar by means of the positioning tool (400),
- the collar also comprises a first collar part (220) and a second collar part (230);
- the tightening means (240) are able to bring the first collar part (220) and the second collar part (230) closer together and are configured to be actuated by means of a tightening tool (500), said tightening means (240) comprising:
- linking means (242) for linking the two collar parts,
- grasping means (244) that are able to be grasped by means of the tightening tool (500),
**characterized in that** said tightening means (240) comprise
- angular transmission means (246) forming a universal joint between the grasping means (244) and the linking means (242),
such that a rotation of the grasping means (244) by means of the tightening tool (500) makes possible a rotation of the linking means (242), the rotation of the linking means (242) bringing the first collar part (220) and the second collar part (230) closer together.

2. Clamping collar according to Claim 1, wherein the positioning means (210) comprise engagement means (212) that are able to be connected to complementary engagement means of the positioning tool (400) that are positioned at one end (406) of the positioning tool (400), so as to allow elevation of the collar and/or the collar to be maintained at height by means of the positioning tool (400).

3. Clamping collar according to Claim 1 or Claim 2, wherein the angle of the universal joint (246) between the grasping means (244) and the linking means (242) is able to be adjusted by means of the tightening tool (500), so as to adapt the positioning of the grasping means (244) to the positioning of the tightening tool (500) .

4. Clamping collar according to any one of Claims 1 to 3, wherein:
- the linking means (242) comprise at least one threaded rod (247),
- the grasping means (244) comprise at least one handle (248) in the form of a ring, which is able to be grasped by a hook (508) positioned at the end of the tightening tool (500).

5. Clamping collar according to Claim 4, wherein:
- at least one collar part (220, 230) comprises a central section (222) and at least one nut (224),
- said at least one nut (224) extending around said at least one threaded rod (247),
- the central section (222) being connected to said at least one nut (224) by means of a pivot connection (226), the pivot connection (226) making it possible to adjust said at least one collar part (220, 230) around the post (P).

6. Clamping collar according to Claim 5, wherein the central section (222) comprises a part (228) in the form of a circular arc comprising at least one holding groove (229).

7. Clamping collar according to any one of Claims 4 to 6, wherein:
- the universal joint (246) is positioned at a first end of said at least one threaded rod (247),
- a removable stop (249) is fastened to a second end of said at least one threaded rod (247),
such that the nut is retained on said at least one threaded rod (247), between the universal joint (246) and the removable stop (249).

8. Clamping collar according to any one of Claims 1 to 7, wherein the holding means (250) comprise a crossmember (252), a coupling plate (253), and/or a ring (356).

9. System for positioning at least one network element (1000) on a post (P), comprising:
- a clamping collar (200) according to any one of Claims 1 to 8,
- the positioning tool (400) that is able to position the collar (200), and
- the tightening tool (500) that is able to actuate the tightening means (240) of the collar.

10. Positioning system according to Claim 9, wherein the tightening tool (500) is a pole (500) referred to as second pole (500), a first end of the second pole (500) comprising a hook (508) and a second end of the second pole (500) comprising a crank.

11. Method for positioning at least one network element (1000) on a post (P), implemented by means of the positioning system according to Claim 9 or 10, said method comprising the following steps:
- connecting (E610) the positioning means (210) of the collar to the positioning tool (400), so as to position the collar (200),
- while maintaining the position of the collar (200) by means of the positioning tool (400), actuating (E620) the tightening means (240) of the collar by means of the tightening tool (500), so as to tighten the collar (200) and thus fasten the collar (200) to the post (P).

12. Positioning method according to Claim 11, further comprising the following step:
- coupling (E630), by means of the positioning tool (400) or a coupling tool, said at least one network element (1000) to the holding means (250) of the collar, in order to hold said at least one network element (1000) on the post (P).
